# EUROPEAN PATENT APPLICATION

(11) **EP 1 197 654 A2**
(43) Date of publication of application: **17.04.2002**
(21) Application number: 01124426.6
(22) Date of filing: 11.10.2001
(51) Int. Cl.: F02N 15/06

(54) **Starter motor for internal combustion engines**

(30) Priority: 12.10.2000 JP 2000311986; 01.10.2001 US 682642
(71) Applicant: Kabushiki Kaisha Moric, Shuuchi-gun, Shizuoka-ken (JP)
(72) Inventor: Nagai, Kenji, c/o Kabushiki Kaisha Moric, Shuuchi-gun, Shizuoka-ken (JP)
(74) Representative: Leson, Thomas Johannes Alois, Dipl.-Ing.

(57) **Abstract**

A very effective and easily assembled low cost rotating electrical machine useable as a starter motor. The commutator is formed at the end of the rotor shaft opposite to its drive end to minimize bending loads on the plain bearing at that end of the rotor shaft. In addition the end cap holding the plain bearing has lugs and stiffening ribs to minimize these loads and provide attachment to an associated mechanism. Thus the machine will have a long life and trouble fee existence.

## Description

This invention relates to a rotating electrical machine and an improved method of manufacturing and assembling such a machine and more particularly to a machine such as a starter motor for an internal combustion engine.

Many types of rotating electrical machines are designed with an outer housing that has a pair of axially spaced end caps between which is positioned a stator shell. The stator shell contains circumferentially spaced permanent magnets that cooperate with coil windings on an associated rotor for either supplying a rotative force if the machine comprises an electrical motor or for generating electrical current in the windings if the machine comprises a generator.

Normally and particularly in the case of starter motors for internal combustion engines, the rotor shaft extends through one of the end caps and is in driving relationship through a one way clutch with an associated device such as the flywheel of an internal combustion engine in the case of a starter motor. Because the end of the rotor shaft, which drives the engine shaft for starting purposes, is more highly loaded, it is the common practice to use an anti-friction bearing such as a roller or ball bearing at this end of the shaft. The other end of the shaft, which normally is more lightly loaded, is journalled in the second end cap by a plain bearing. This plain bearing includes a shell that is impregnated with oil or another lubricant. The shell is normally formed from a porous metallic material such as porous iron.

In connection with these types of machines, the commutator is normally positioned at the end of the rotor adjacent the driving shaft end thereof. This means that the coil winding and the permanent magnets are spaced axially from the anti-friction bearing and this causes an increased loading on the plane bearing. Also vibrations will occur that adversely affect both bearings. This is particularly a problem because the plain bearing end of the rotor shaft is normally cantilevered. That is only the drive end of the outer housing is affixed to the associated internal combustion engine.

In order to improve the output and reduce the size, it has been the practice to use permanent magnets that have a high magnetic flux density such as sinter neodymium-iron-boron magnets.

As has been noted, it is generally the practice that the starter motor is mounted only at the driving shaft end by attachment to either the crankcase or flywheel housing of the associated engine. Thus, there is a possibility of vibration and increased loading on the plain bearings that can cause in extreme instances high wear or early failure.

One way in which these types of machines are formed is that the magnetic material is affixed to the stator shell and then is magnetized in place. Thereafter, the rotor shaft and commutator are assembled. This presents certain problems in alignment and, therefore, an assembly method has been disclosed in Japanese Patent Application 2000-61354 and its corresponding United States Application, App. No: 09/800709, filed March 7, 2001 and assigned to the assignee hereof. The end cap carrying the anti-friction bearing and a brush holder carrying brushes that cooperate with the commutator are held in a fixed location, the brushes are retracted and then the rotor assembled into it. Then the brushes are released so as to contact the commutator. The stator shell with permanent magnets in place is then installed over this assembly and the remaining end cap put into place.

This same method of assembly cannot be used, however, if the conventional brush carrier is mounted on the remote end from the end cap with anti-friction bearing ie. the second end cap. Because this must be assembled after the stator shell is in place, it is not possible to permit the subsequent extension of the brushes once the second end cap is put into place since they are no longer accessible.

It is, therefore, a principle object to this invention to provide an improved rotating electrical machine construction wherein the commutator can be placed at the opposite end of the rotor shaft from its driven shaft portion.

It is a further object to this invention to provide an improved method for assembling an rotating electrical machine of this type where the commutator and brush carrier are disposed at the end of the windings of the rotor remote from the driving or driven end of the rotor shaft.

As has been noted, it is the conventional practice with starter motors and other types of rotating electrical machines, to attach only the first end cap to the body that contains the driving or driven shaft that cooperates with the rotor shaft. This provides a cantilevered arrangement that can add to the vibratory problems aforenoted.

Also, the end caps are normally held together with a plurality of elongated through bolts to place a compressive load on the stator shell and hold it in place. Because the second end cap only holds a plain bearing, the axially loading caused by these fasteners can place bending loads on the assembly which further can deteriorate the plain bearing and put loads on the anti-friction bearings that are undesirable.

It, therefore, a still further object to this invention to provide an improved motor housing arrangement for a rotating electrical machine.

### Summary of Invention

A first feature of this invention is adapted to be embodied in a rotating electrical machine comprised of an outer housing assembly and a rotor that includes a rotor shaft journalled therein. The rotor shaft has a drive portion extending outwardly beyond the outer housing assembly for driving relationship with another shaft. The outer housing assembly is comprised of a stator shell closed at opposite ends thereof by first and second end caps. The first end cap provides an anti-friction bearing journaling the rotor shaft adjacent the drive portion with the drive portion extending through the first end cap. The first end cap has attachment means for providing a mounting connection to a body that journals the other shaft. The stator shell carries a plurality of permanent magnets. The rotor has a plurality of windings that cooperate with the permanent magnets. A commutator is fixed to the rotor shaft at and end thereof spaced from the drive portion and in electrical communication with the rotor winding. Fasteners affix the end caps to each other and to opposite ends of the stator shell. A brush carrier is fixed to the stator shell and carries brushes that cooperate with the commutator. A plain bearing is carried by the second end cap for journaling the end of the rotor shaft that is spaced from its drive portion.

Another feature of the invention is adapted to be embodied in a method of assembling a rotating electrical machine as described in the preceding paragraph. In accordance with this method, the first end cap is held and the rotor shaft drive portion is inserted into the first end cap to extend therethrough and journaling the rotor shaft in the anti-friction bearing carried thereby. The number and location of brushes and brush carriers is limited to an area that subtends an arc less than 180°. The brush carrier is positioned to one side of the commutator with the brushes facing the commutator and at least partially in axially alignment therewith. The brush carrier is moved transversely relative to the commutator to force the brushes in an inward direction in their brush carriers. The brush carrier and the second end cap are then moved axially relative to the rotor shaft to place the brushes in full axially contact with the commutator and for supporting the other end of the rotor shaft in the plain bearing of the second end cap. The end caps and stator shell are then affixed together.

A still further feature of the invention is adapted to be embodied in a rotating electrical machine as set forth in the first paragraph of this section. In connection with this, the second end cap is formed with stiffening ribs in the area of the fasteners so as to minimize bending loads on the plain bearing caused by the fasteners.

### Brief Description of Drawings

FIG. 1 is a side elevational view, with a portion broken away and shown in section, of a rotating electrical machine in the form of a starter motor embodying the invention.

FIG. 2 is an end elevational view looking in the direction of the arrow 2 in FIG. 1.

FIG. 3 is a cross sectional view taken through the stator shell along a plane perpendicular to the rotor axis and showing the configuration of the permanent magnets associated therewith.

FIG. 4 is a perspective view showing the brush carrier and the brushes with the arrows indicating the direction of movement of the brushes on assembly of the starter motor.

FIG. 5 is a partially exploded, perspective view showing how the through bolts maintain the end caps of the starter motor housing.

FIG. 6 is a cross-sectional view taken through one of the mounting lugs of the rear end cap of the starter motor.

FIG. 7 is a cross-sectional view of the end mounting cap taken along a plane perpendicular to that of FIG. 6.

FIG. 8 is a partially exploded, perspective view of the front portion of a motorcycle, with the body components removed, so as to more clearly show how the starter motor is mounted to the associated internal combustion engine that powers the motorcycle.

FIG. 9 is an enlarged side elevational view looking in the direction of the arrow 9 in FIG. 8 and showing the components in an assembled condition with the motorcycle frame being shown in phantom.

FIG. 10 is a cross-sectional view taken along the line 10-10 of FIG. 9 and shows how the starter motor is mounted on the crankcase assembly of the engine.

FIG. 11 is an elevational view taken generally in the direction of the arrow 11 in FIG. 10.

### Detailed Description

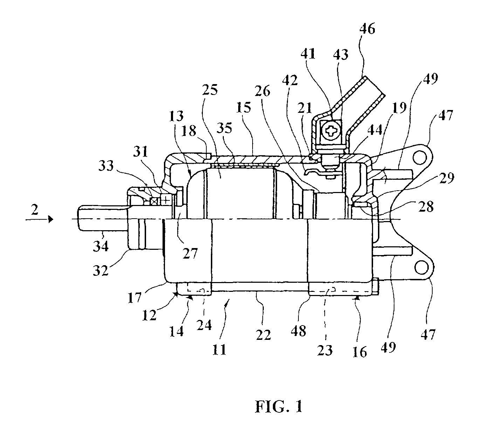

Referring first primarily to FIGS. 1 through 3, a rotating electrical machine in the form of an electric motor is indicated generally by the reference numeral 11. In the particular application illustrated, the electric motor 11 is employed as a starting motor for an internal combustion engine utilized to power a small vehicle such as a motorcycle or the like. As will become apparent from the following description, however, it will be apparent to those skilled in the art that the invention can be utilized with a wide variety of rotating electrical machines, but has particular utility where there is a driving connection between an extending portion of the rotor shaft of the electrical machine and associated shaft of another device such as the crankshaft of an internal combustion engine in the case of either a starter or a generator.

The electric motor 11 includes an outer housing assembly, indicated generally by the reference numeral 12 in which a rotor, indicated generally by the reference numeral 13 is rotatably journalled in a manner to be described.

The outer housing assembly 12 is comprised of a first, forward end cap, indicated generally by the reference numeral 14, a stator shell 15 and a rearward, second end cap, indicated generally by the reference numeral 16. The forward and rearward end caps 14 and 16 may be formed from a suitable material such as cast iron aluminum or the like. The forward end cap 14 has a cup shaped portion 17 into which one end of the stator shell 15 is fitted by means of projecting tongue 18 thereof. In a like manner, the rear end cap 16 has a cup like portion 19 into which a further tongue 21 of the stator shell 15 is fitted.

A pair of threaded fasteners 22 extend through openings 23 formed in the rear cap 16 and along the sides of the stator shell 15 to be threaded into threaded openings 24 formed in the front cap 14. Hence, the stator shell 15 is sandwiched between these two end caps 14 and 16.

The rotor 13 is comprised of a plurality of windings formed on a central part thereof, indicated by the reference numeral 25, and which have their terminal ends connected to a commutator 26 which is mounted at the rear end of a rotor shaft 27. This rear end of the rotor shaft 27 is journalled in the second end cap 16 by a plain type bearing 28, which is formed from a suitable oil impregnated material such as porous iron and is contained within a central boss 29 of the rear cap 16.

The forward end of the rotor shaft 27 isjournalled in an anti-friction bearing such as a ball or roller bearing 31 that is received in a nose portion 32 of the front cap 14. An oil seal 33 is disposed outwardly thereof so as to preclude oil leakage.

The rotor shaft 27 has a forward end 34 which extends through the nose portion 32 and which is splined so as to receive a starter gear, as will be described later, that cooperates through a one way clutch with the flywheel of the associated engine for starting purposes.

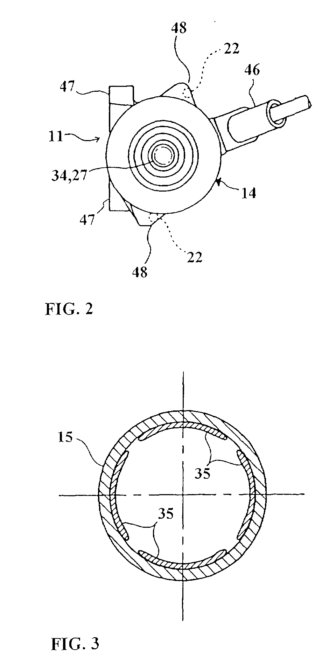

Referring now primarily to FIGS. 1 and 3, the inner surface of the stator shell 15 has affixed to it in a suitable manner such as by an adhesive four circumferentially spaced permanent magnets 35. These permanent magnets 35 are formed from a suitable magnetic material of a high magnetic flux density such as neodymium-iron-boron. When positioned on the inner surface of the shell 15, these magnetic bodies 35 are permanently magnetized utilizing magnetization coils disposed to the inner and outer surfaces of the stator shell 15.

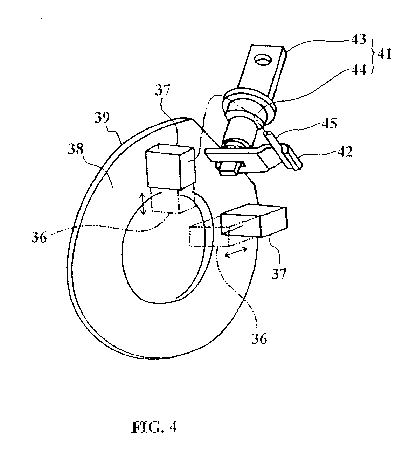

Referring now in detail primarily to FIGS. 1 and 4, electrical power is transmitted between the rotor windings 25 and an external source through the commutator 26. This electrical communication is provided by a pair of brushes 36 that are slidably supported in a known manner in the brush carriers 37. These brushes 36 are normally biased outwardly in the direction shown by the arrows in FIG. 4 by coil compression springs.

The brush carriers 37 are in turn, fixed to a brush carrier plate 38 which has a generally cylindrical outer surface 39 and a central opening to clear the commutator 26. This brush carrier plate 38 is detachably affixed to the second end cap 19 by a pair of threaded fasteners (not shown).

It should be noted that the brush carrier 37 and brushes 36 are disposed so that they subtend an arc not greater than 180°. In the specific embodiment disclosed, since there are four permanent magnets 35 there are provided only two brush carriers 37 and brushes 36. In this specific example, these brushes 36 and brush carriers 37 subtend an arc of 90°. The reason for this will be described shortly.

An electrical terminal, indicated generally by the reference numeral 41 is affixed to a terminal plate 42 that is affixed to the brush holder plate 38 between the brush carriers 37. This terminal 41 includes a conductive portion 43 and an insulator portion 44, the latter of which is held in sealing engagement with an opening in the rear or second end cap 16.

A wire conductor 45 interconnects the terminal. 34 with one of the brush carriers 37. The remaining brush carrier 37 is grounded to the outer housing assembly 1 2 of the starter motor 11. As may be seen in FIG. 1, the terminal 41 is encircled by an insulating housing 46 that is affixed to the second end cap 16.

The manner of assembly of the starter motor 11 will now be described referring primarily to FIGS. 1 through 4. First, the first end cap 14 is placed into a suitable fixture. Then the complete rotor assembly 13 including the windings 25 and commutator 26 is pressed into the bearing 31. The stator shell 15 with attached and magnetized permanent magnets 35 is then placed around the windings 25 with the tongue 18 received in the first end cap 12.

At this time, the terminal 41 is affixed to the brush holder plate 38 by passing it through the opening in the second end cap 16 so that the insulator 41 sealingly engages the opening in this end cap 16. Then, the terminal 43 is affixed by soldering to the terminal plate 42. The wire 45 is then attached, as is the ground terminal (not shown) for the remaining brush 36.

It should be noted that these brush carriers 37 extend axially beyond the outer peripheral edge of the end caps 16 so that they can be placed to one side of the commutator 26. At this time, the central opening in the brush holder plate 38 is offset relative to the commutator and the brushes 36 engage the commutator"s outer surface.

The brush holder plate and assembly is then moved transversely so that it will be positioned in axially alignment with the axis of the rotor shaft 27. This causes the brushes 36 to be retracted against their urging springs. At this time, then the end cap 16 and attached brush holder plate 38 can be moved axially so that the plain bearing 38 engages and rotatably journals the rotor shaft 27. The threaded fasteners 22 are then put into place and tightened so as to finish the assembly of the starter motor.

Normally, starters for internal combustion engines are mounted in a cantilevered fashion so that only the first end cap 14 is fixed to the engine. In accordance with another feature of the invention, however, the rear end cap 16 is provided with a mounting and stiffening assembly shown best in FIGS. 1, 2 and 5-7. This assembly is comprised of an elongated flange that terminates in a pair of lugs 47 and which extend outwardly between lugs 48 of the second end cap 16 in which the fastener openings 23 are formed so as to provide rigidity to this end cap which resist bending when the fasteners 22 are tightened. This aids in relieving loads on the plain bearing 28. In addition, this mounting bracket is further reinforced by an additional pair of stiffening ribs 49 which join with the cup shape portion 19 of the second end cap 16 and which are disposed on opposite sides of the lugs 48 so as to offer further rigidity against bending when the fasteners 22 are tightened.

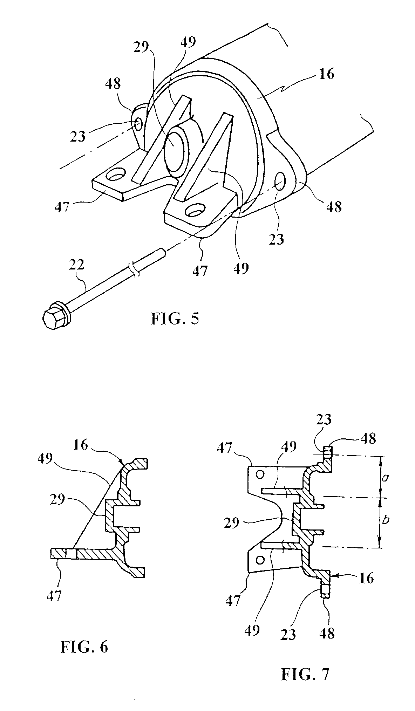

As may be seen from Figure 7, although the fasteners 22 and their receiving openings are spaced the distance "a" from the ribs 49 they provide stiffening in the large area "b" and the lugs 47 provide still further reinforcement to preclude bending. Hence, this substantially reduces the bending forces which might otherwise be asserted on the plain bearing 28 and further lengthens the life of the starter motor without significantly adding to its costs.

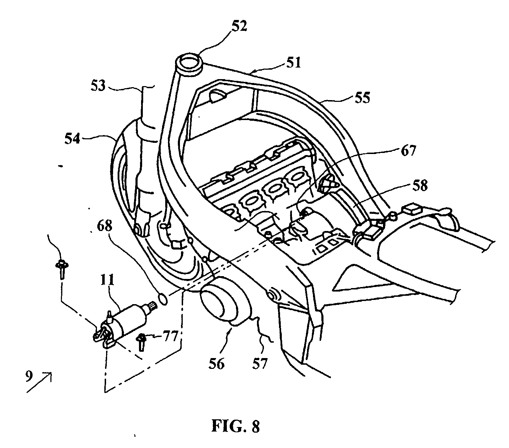

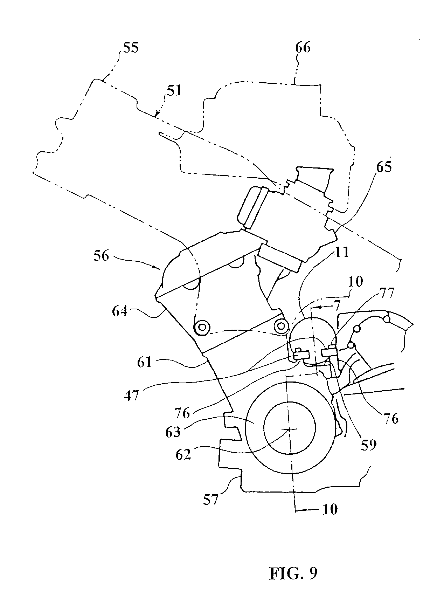

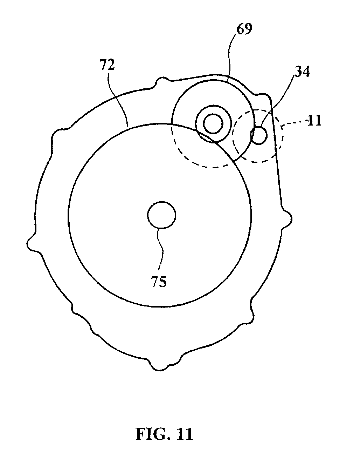

The way in which the starter motor 11 is attached to an internal combustion engine will now be explained by reference to FIGS. 8 through 11 and initially primarily to FIGS. 8 and 9, which show in part the front portion of a motorcycle frame assembly, indicated generally by the reference numeral 51 with the body parts and other components removed. The frame assembly 51 includes a head pipe 52 that journals a pair of front forks 53 (only one of which is shown) in a known manner for steering of a front wheel 54 also in a well-known manner. The frame 51 has a main frame portion 55 in which an internal combustion engine, indicated generally by the reference numeral 56, is supported in any well-known manner. The engine 56, as is common with motorcycle practice, has a combined crankcase transmission assembly 57, which includes at one end thereof a transfer drive housing 58 and a crankcase and transmission case assembly 59.

Although the particular type of engine with which the starter motor 11 is associated can be of any type, the illustrated embodiment shows a transversely positioned, four cylinder, inline, overhead camshaft type engine that is comprised of a cylinder block 61 to the lower end of which is affixed the combined crankcase and transmission assembly 57 and which journals the engine crankshaft for rotation about its axis 62 with the flywheel and clutch housing thereof being indicated at 63.

A cylinder head assembly 64 is affixed to the cylinder block 61 and has associated with it a pair of overhead camshafts that are driven at one half-crankshaft speed from the crankshaft in a well-known manner.

The upper or rear side of the cylinder head 64 forms the intake side and a plurality of carburetors 65 are fixed thereto to supply a fuel air charge to the combustion chambers of the engine. Air for this fuel air charge is drawn from an air box 66.

The upper portion of the crankcase transmission assembly 57 is formed with an opening 67 that is complimentary to the nosepiece 31 of the first end cap 14 of the starter motor 11. An O-ring seal 68 is positioned in a groove of this nosepiece and sealingly engages the surface defining the opening 67 when the starter motor 11 is fitted there into. In this position, a gear associated with or formed integrally with the starter motor drive shaft portion 34 engages a step down reduction gear 69 that is journalled on the flywheel housing 57 on a shaft 71.

This gear 69 is a compound gear and has a further portion that is engaged with a starter ring gear 72, which is, in turn, coupled by means of a one-way clutch 73 to the flywheel 63. The flywheel 63 accommodates a clutch mechanism, which couples the flywheel to a large reduction gear 74, which is turn, drives a transmission input shaft 75 contained with the crankcase transmission assembly 57.

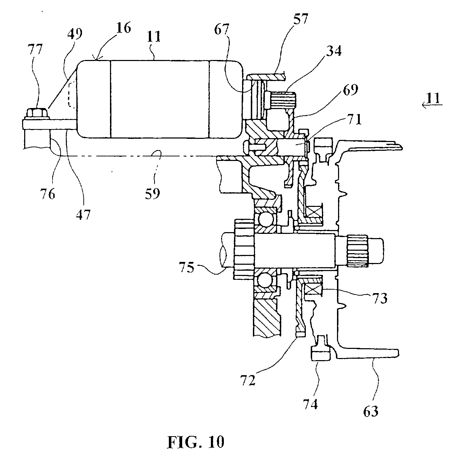

As best seen in FIG. 10, when the front end of the starter motor 11 and specifically its nose piece 32 is supported within the transmission portion 57, the mounting lugs 47 of the rear end cap 16 will be juxtaposed to a pair of mounting bosses 76 formed on the upper portion 59 of the crankcase transmission cover. Bolts 77 are threaded through the openings in the lugs 47 so as to affix and support this end of the starter motor 11. Therefore unlike prior art constructions, the starter motor 11 is not cantilevered from the engine 56 but is rigidly attached at both ends thereto. This eliminates bending stresses on the plain bearing 28 and also reduces the load on the anti-friction bearing 31 as well as prevents vibrations from occurring.

Thus, from the foregoing description it should be readily apparent that the described invention provides a very effective and easily assembled low cost starter motor that will have a long life and trouble fee existence. Of course, the foregoing description is that of a preferred embodiment of the invention and various changes and modifications may be made without departing from the spirit and scope of the invention, as defined by the appended claims.

A very effective and easily assembled low cost rotating electrical machine useable as a starter motor. The commutator is formed at the end of the rotor shaft opposite to its drive end to minimize bending loads on the plain bearing at that end of the rotor shaft. In addition the end cap holding the plain bearing has lugs and stiffening ribs to minimize these loads and provide attachment to an associated mechanism. Thus the machine will have a long life and trouble fee existence.

## Claims

1. A rotating electrical machine comprised of an outer housing assembly and a rotor including a rotor shaft journalled therein, said rotor shaft having a drive portion extend outwardly beyond said outer housing assembly for driving relation with another shaft, said outer housing assembly being comprised of a stator shell closed at opposite ends thereof by first and second end caps, said first end cap providing an anti-friction bearing journaling said rotor shaft adjacent said drive portion with said drive portion extending through said first end cap, said first end cap having attachment means for providing a mounting connection to a body that journals the another shaft, said stator shell carrying a plurality of permanent magnets, said rotor having a plurality of windings cooperating with said permanent magnets, a commutator fixed to said rotor shaft at an end thereof spaced from said drive portion of said rotor shaft and in electrical communication with said rotor windings, fasteners for affixing said end caps to each other and to opposite ends of said stator shell, a brush carrier fixed to said stator shell and carrying brushes cooperating with said commutator, and a plain bearing carried by said second end cap for journaling the end of said rotor shaft spaced from said drive portion.

2. A rotating electrical machine as set forth in claim 1 wherein the brush carrier carries a number of brushes all of which are confined in an area that encompasses not greater than 180° around the rotational axis of the rotor shaft.

3. A rotating electrical machine as set forth in claim 2 wherein the brushes are confined in an area that encompasses 90°around the rotational axis of the rotor shaft.

4. A rotating electrical machine as set forth in claim 2 wherein the brush carrier carries two brushes.

5. A rotating electrical machine as set forth in claim 4 wherein four permanent magnets are fixed to the stator shell.

6. A rotating electrical machine as set forth in claim 5 wherein the permanent magnets are formed from a high magnetic density material.

7. A rotating electrical machine as set forth in claim 6 wherein the high magnetic density material comprises neodymium-iron-boron.

8. A rotating electrical machine as set forth in claim 7 wherein the brushes are confined in an area that encompasses 90°around the rotational axis of the rotor shaft.

9. A rotating electrical machine as set forth in claim 1 wherein the machine comprises a starter motor for starting an internal combustion engine and the another shaft comprises a shaft associated with said engine.

10. A rotating electrical machine as set forth in claim 1 wherein the end caps are fixed to each other by threaded fasteners and the stator shell is sandwiched therebetween.

11. A rotating electrical machine as set forth in claim 10 wherein the brush carrier is fixed to the second end cap.

12. A rotating electrical machine as set forth in claim 11 wherein the second end cap is affixed to a body that journals the another shaft.

13. A rotating electrical machine as set forth in claim 12 wherein the machine comprises a starter motor for starting an internal combustion engine and the another shaft comprises a shaft associated with said engine.

14. A rotating electrical machine as set forth in claim 10 wherein the second end cap is formed with stiffening ribs in the area of the plane bearing to minimize distortion loads thereon from the threaded fasteners.

15. A rotating electrical machine as set forth in claim 14 wherein the second end cap is formed with a mounting bracket that is affixed to a body that journals the another shaft and at least some of the stiffening ribs are integral with said mounting bracket.

16. A rotating electrical machine comprised of an outer housing assembly and a rotor including a rotor shaft journalled therein, said rotor shaft having a drive portion extend outwardly beyond said outer housing assembly for driving relation with another shaft, said outer housing assembly being comprised of a stator shell closed at opposite ends thereof by first and second end caps, said first end cap providing an anti-friction bearing journaling said rotor shaft adjacent said drive portion with said drive portion extending through said first end cap, said first end cap having attachment means for providing a mounting connection to a body that journals the another shaft, said stator shell carrying a plurality of permanent magnets, said rotor having a plurality of windings cooperating with said permanent magnets, a commutator fixed to said rotor shaft in electrical communication with said rotor windings, fasteners for affixing said end caps to each other and to opposite ends of said stator shell, a brush carrier fixed to said stator shell and carrying brushes cooperating with said commutator, and a plain bearing carried by said second end cap for journaling the end of said rotor shaft spaced from said drive portion.

17. A rotating electrical machine as set forth in claim 16 wherein the end caps are fixed to each other by threaded fasteners and the stator shell is sandwiched therebetween.

18. A rotating electrical machine as set forth in claim 17 wherein the second end cap is formed with stiffening ribs in the area of the plane bearing to minimize distortion loads thereon from the threaded fasteners.

19. A rotating electrical machine as set forth in claim 18 wherein the second end cap is formed with a mounting bracket that is affixed to a body that journals the another shaft and at least some of the stiffening ribs are integral with said mounting bracket.

20. A method of assembling a rotating electrical machine comprised of an outer housing assembly and a rotor including a rotor shaft journalled therein, said rotor shaft having a drive portion extend outwardly beyond said outer housing assembly for driving relation with another shaft, said outer housing assembly being comprised of a stator shell closed at opposite ends thereof by first and second end caps, said first end cap providing an anti-friction bearing journaling said rotor shaft adjacent said drive portion with said drive portion extending through said first end cap, said first end cap having attachment means for providing a mounting connection to a body that journals the another shaft, said stator shell carrying a plurality of permanent magnets, said rotor having a plurality of windings cooperating with said permanent magnets, a commutator fixed to said rotor shaft at an end thereof spaced from said drive portion of said rotor shaft and in electrical communication with said rotor windings, fasteners for affixing said end caps to each other and to opposite ends of said stator shell, a brush carrier fixed to said stator shell and carrying brushes cooperating with said commutator, and a plain bearing carried by said second end cap for journaling the end of said rotor shaft spaced from said drive portion, said method comprising the steps of holding the first end cap, placing the rotor shaft drive portion into the first end cap to extend therethrough and journaling the rotor shaft in the anti-friction bearing carried thereby, limiting the number and locations of the brushes and brush carriers to an area that subtends an arc less than 180°, positioning the brush carrier to one side of the commutator with the brushes facing the commutator and at least partially in axial alignment therewith, moving the brush carrier transversely relative to the commutator to force the brushes in an inward direction to their brush carriers, moving the brush carrier and second end cap axially relative to the rotor shaft to place the brushes in full axial contact with the commutator and for supporting the other end of the rotor shaft in the plain bearing of said second end cap, and affixing the end caps and stator shell together.

21. A method of assembling a rotating electrical machine as set forth in claim 16 wherein the brush carrier is affixed to the second end cap before the brush carrier and second end cap are moved axially relative to the rotor shaft.

22. A method of assembling a rotating electrical machine as set forth in claim 16 wherein the end caps are affixed to each other and to the stator shell by sandwiching the stator shell between the end caps.
